# EUROPEAN PATENT SPECIFICATION

(11) **EP 4 291 599 B1**
(45) Date of publication and mention of the grant of the patent: **19.06.2024**
(21) Application number: 22724947.1
(22) Date of filing: 16.02.2022
(51) Int. Cl.: C08G 73/06, C08L 75/04, C08L 79/04

(54) **A POLYMERIC HYBRID MATERIAL WITH PHOTOTHERMAL PROPERTIES AND PRODUCTION METHOD THEREOF**
POLYMERHYBRIDMATERIAL MIT PHOTOTHERMISCHEN EIGENSCHAFTEN UND HERSTELLUNGSVERFAHREN DAFÜR
MATÉRIAU HYBRIDE POLYMÈRE À PROPRIÉTÉS PHOTOTHERMIQUES ET SON PROCÉDÉ DE PRODUCTION

(30) Priority: 22.02.2021 TR 202102506
(43) Date of publication of application: 20.12.2023
(73) Proprietor: Sabanci Üniversitesi, 34956 Tuzla/Istanbul (TR); Sabanci Üniversitesi Nanoteknoloji Arastirma Ve Uygulama Merkezi Sunum, 34956 Istanbul (TR)
(72) Inventor: UNAL, Hayriye, Tuzla/Istanbul (TR); UNAL, Serkan, Tuzla/Istanbul (TR); ERDINC TAS, Cuneyt, Pendik/Istanbul (TR)
(74) Representative: Sevinç, Erkan
(86) International application number: PCT/TR2022/050136
(87) International publication number: WO 2022/177539

(56) References cited:
- CN-A- 110 816 009
- US-A1- 2017 095 558
- US-A1- 2020 231 919
- FREDI GIULIA ET AL: "Bioinspired Polydopamine Coating as an Adhesion Enhancer Between Paraffin Microcapsules and an Epoxy Matrix", ACS OMEGA, vol. 5, no. 31, 11 August 2020 (2020-08-11), pages 19639-19653, XP055811044, US ISSN: 2470-1343, DOI: 10.1021/acsomega.0c02271 Retrieved from the Internet: URL:https://pubs.acs.org/doi/pdf/10.1021/a csomega.0c02271>
- TAS CUNEYT ERDINC ET AL: "Photothermal Waterborne Polydopamine/Polyurethanes with Light-to-Heat Conversion Properties", ACS APPLIED POLYMER MATERIALS, vol. 3, no. 8, 13 August 2021 (2021-08-13) , pages 3929-3940, XP055946880, ISSN: 2637-6105, DOI: 10.1021/acsapm.1c00495

## Description

### Field of the Invention

The present invention relates to a polymeric hybrid material with photothermal properties, a production method and use thereof.

### Background Art

Materials with photothermal properties are materials that can efficiently convert the absorbed light energy into heat energy as a result of the intense absorption of light energy and, accordingly, the collective vibration of the free electrons on their surfaces at a certain frequency. With such properties, photothermal materials can cause significant local temperature rises to be observed, and on the other hand, they can trigger a large number of easily controllable thermal processes. In general, materials with photothermal properties are known to be used in various critical applications such as cancer treatment, surface sterilization, desalination/purification processes, and the design of self-healing materials.

Semiconductor organic polymers with strong light absorbing capacity such as polyaniline, polypyrrole and polydopamine are known in the art for having the potential to efficiently convert light energy to heat energy. Among these known photothermal polymers, in addition to the photothermal properties of polydopamine, it also has a strong adhesion feature that allows it to be coated on the surfaces of products made of various materials, from wood to polymer, owing to the catechol groups in its structure. Polydopamine-containing polymeric composites are typically prepared by coating polymeric material surfaces with polydopamine or by incorporating functionalized polydopamine nanoparticles into the polymer matrix. Although polymer composites of polydopamine and polydopamine have been proven to exhibit significant photothermal properties, they all have multicomponent, heterogeneous forms. On the other hand, they are difficult to produce, and are disadvantageous in terms of their effects on the environment, production costs and applicability of the final products obtained.

Patent application CN 110816009 A discloses a photo-thermal conversion material with a double-layer structure. The disclosed structure comprises a layer of polydopamine over a layer of polyurethane foam. The preparation method of the photo-thermal conversion material includes the following steps: S1, purification of polyurethane sponge; S2, loading of polydopamine: repeatedly immersing the purified polyurethane sponge obtained in step S1 in Tris-HCI buffer solution containing dopamine, allowing it to stand in a water bath at 25-80 °C for 4 to 24 hours; and drying the product obtained in step S3, S2. Said document discloses that the surface of a polyurethane material is coated with polydopamine. However, within the scope of said document, there is no teaching about coating the polymer particles with polydopamine and thus imparting photothermal properties to the particle-sized polymers.

Thermal energy storage systems containing phase change materials are of great interest today. Said phase change materials absorb or release heat from or into the environment during solid-liquid changes. Almost no temperature change is observed while the heat energy is stored in this way, which is thus called latent heat storage. Upon an increase in the ambient temperature and once the temperature of the composition containing the phase change material reaches the melting temperature of the phase change material, the phase change material in solid state absorbs heat from the environment and changes its phase into a liquid state. Said phase change material continues to absorb heat from the environment until it is completely liquid, thereby cooling its environment. On the contrary, as a result of a decrease in the ambient temperature and once the temperature of the composition containing the phase change material reaches the freezing point of the phase change material, the phase change material in liquid state begins to solidify, and in the meantime, heat is released to the environment. In this way, the phase change material is enabled to heat its environment. It is known that phase change materials can be used to increase the efficiency on surfaces with photothermal properties. However, some difficulties are encountered in the application of phase change materials to these surfaces.

In systems containing solid-liquid phase change material, it is recommended to properly encapsulate the phase change material in a supporting material to prevent leakage due to phase change in the melting direction. To achieve this, phase change materials are integrated into supporting materials such as inorganic porous materials and cross-linked polymers, or encapsulated in emulsions that provide stable phase change materials whose structure remains intact when the ambient temperature is higher than the melting temperature of the phase change material. However, these are difficult operations, and encapsulated phase change materials may also experience the problem that their thermal performance may be reduced when incorporated into a matrix relative to their bulk performance, along with problems arising from potential incompatibilities between the phase change material encapsulating material and the matrix.

Zhang et al. (https://doi.org/10.1016/j.enbuild.2017.05.037) experimentally examined the use of carbon nanotubes as fillers and the effect of paraffin-carbon nanotubes/expanded perlite on increasing the thermal conductivity of stable composite phase change materials.

Weinstock et al. (https://doi.org/10.1016/j.tifs.2019.07.003) examined the types and properties of the phase change materials, encapsulation techniques of micro/nano phase change materials and the applications of phase change materials in the food industry.

Stable phase change material systems, in which phase change materials are integrated directly into polymer matrices without any other encapsulation agents, are extremely limited. Fang et al. (https://doi.org/10.1016/j.enconman.2010.06.012) prepared polyethylene glycol/epoxy resin composites as stable phase change materials and investigated their basic properties. In another study, Wang et al. (https://doi.org/10.1016/j.apenergy.2010.01.010) obtained fatty acid eutectic/polymethyl methacrylate (PMMA) stable phase change material composites by incorporating melted phase change materials into the system during PMMA synthesis and tested the final composite properties in terms of thermal energy storage performance.

In order to overcome the above-mentioned difficulties and to provide solutions to different applications based on photothermal property, there is a need to provide a hybrid material containing polymers in particle size, which provide improved photothermal effect, and a production method of such hybrid material.

### Objects of the Invention

Principal object of the present invention is to provide a polymeric hybrid material that provides a photothermal effect.

Another object of the present invention is to provide a homogeneous polymeric hybrid material that provides photothermal effect.

Another object of the present invention is to provide a hybrid material containing particulate polymers that impart photothermal properties to the object on which it is coated or incorporated. Another object of the present invention is to provide a hybrid material comprising polymer particles coated with polydopamine so as to have a uniform coating thickness.

Another object of the present invention is to provide a method in which a stable hybrid material is obtained by combining polymer particles that can be homogeneously dispersed and stable in a basic aqueous medium with polydopamine.

Another object of the present invention is to provide a method for imparting photothermal properties to particulate polymers.

Another object of the present invention is to provide a method for coating polymer particles with polydopamine such that they have a homogeneous coating thickness.

Still another object of the present invention is to provide a particulate hybrid material with a homogeneous morphology, which is suitable for use as a coating material, as well as in the production of films, foams, membranes, adhesives, sponges or fibers, and which imparts photothermal properties to the product to which it is applied or incorporated.

### Summary of the Invention

The present invention relates to a polymeric hybrid material with photothermal properties comprising polydopamine and particles of polyurethane or a polymer made up of monomers including polyurethane monomers.

The surfaces of the polymer particles described herein are coated with polydopamine. The particles are in sub-micron scale.

Within the scope of the invention, the production method and use/application areas of the polymeric hybrid material with photothermal properties are also explained.

### Brief Description of the Drawings

The drawings, whose brief description is provided below are just given for better understanding of the present invention and as such, are not intended to determine the scope of the claimed subject matter, in the absence of the description.
Figure 1 is a graph showing particle size distribution of polyurethane (WPU) and the polymeric hybrid material (PDAPU) containing polydopamine coated polyurethane particles according to the present invention;
Figure 2a is a graph showing particle size distribution of polyurethane (WPU) and different samples (PDA-WPU (mg/ml)/(h)) of the polymeric hybrid material containing polydopamine coated polyurethane particles according to the present invention;
Figure 2b is a graph showing the z-mean diameter values of the particles of the samples in Figure 2a;
Figures 3a and 3b show images of the particles from the samples presented in Figure 1a (WPU and PDAPU, respectively), as dispersed in aqueous media, taken using transmission electron microscopy (TEM);
Figure 4 is a graph showing the values of Young's modulus, tensile strength and elongation at break of the films from the examples in Figure 2a;
Figures 5a and 5b are graphs showing time-temperature profiles obtained by exposing the films of the examples in Figure 2a to sunlight with an intensity of 1 SUN (100 mW/cm²) and 3 SUN (300 mW/cm²), respectively;
Figures 6a and 6b are graphs showing time-temperature profiles of the films from the examples in Figure 2a obtained by exposing them to sunlight with an intensity of 1 SUN (100 mW/cm²) and 3 SUN (300 mW/cm²), respectively, and cycled 3 times, also serving to observe their reusability;
Figure 7a is a graph showing time-temperature profiles of the surface temperatures caused by exposing the containers prepared using the examples in Figure 1 to sunlight with an intensity of 3 SUN (300 mW/cm²);
Figure 7b is a graph showing the time-based water loss resulting from introducing water into the containers studied in Figure 7a and exposing them to sunlight with an intensity of 3 SUN (300 mW/cm²);
Figure 8a is a graph showing the Young's modulus, tensile strength and elongation at break values of a film made from a dispersion of polyurethane particles (WPU), a film made from a dispersion of polydopamine coated polyurethane particles (PDA-WPU) according to the present invention, and films made from a dispersion of polydopamine coated polyurethane particles containing different amounts of polyethylene glycol (PDA-WPU/PCM) according to the present invention;
Figure 8b is a graph showing the energy storage efficiency of the films made from a dispersion of polydopamine coated polyurethane particles containing different amounts of polyethylene glycol (PDA-WPU/PCM).

### Detailed Description of the Invention

Within the scope of the oresent invention, a oolvmeric hybrid material with photothermal properties is provided. Said hybrid material contains polydopamine and particles of polyurethane or a polymer made up of monomers including polyurethane monomers. wherein the surfaces of said polymer particles are coated with polydopamine and the particles are in sub-micron scale. Due to the fact that said polymeric hybrid material is in a particulate structure and dispersed in water (in the form of dispersion), serious advantages are obtained in the application stages.

The hybrid material presented within the scope of the invention is, in general, a material with a structure suitable for use in a wide variety of applications and directly imparting photothermal properties to the product to which it is applied, in which a synergistic effect has been achieved due to the fact that the surface of each of said polymer particles is coated with polydopamine. Said hybrid material contains polymer particles coated with dopamine, as homogeneously dispersed in water (in dispersion).

The polymer particles in the structure of said hybrid material presented within the scope of the invention are selected from polyurethane or a polymer made up of monomers including polyurethane monomers.

Within the scope of the present specification, the pH value of the medium, i.e., the aqueous medium or the aqueous mixture, which is desired to be expressed by the basicity of the medium, is above 7. If said polymer particles are particles of a polymer that cannot be homogeneously dispersed or distributed in a basic aqueous medium and/or cannot be stable therein, the hybrid material of the present invention providing a synergistic effect cannot be provided.

The hybrid material according to the present invention containing particles of polyurethane or a polymer made up of monomers including polyurethane monomers is advantageous in that it is capable of addressing many applications needs in the state of the In order to provide additional advantage and application compatibility, the polymer particles in the structure of the hybrid material of the present invention are particles of a polymer selected from the polymers that can be homogeneously dispersed and stable in a basic aqueous medium, considering the application area in which said hybrid material will be used. For example, if it is desired to impart photothermal properties to the surface of a textile product, it may be possible to coat the hybrid material according to the present invention on the surface of the relevant textile product. In the hybrid material to be used for such a coating, it is appropriate to select polyurethane from "polymers that can be homogeneously dispersed and stable in a basic aqueous medium". As a result of the studies, the textile product having the hybrid material coated thereon which is obtained once the hybrid material dispersed in an aqueous medium containing polydopamine coated polyurethane particles is applied to said surface and kept in suitable drying conditions, may, for example, be the subject of the production of winter military uniforms or the production of clothes for winter sports, in terms of exhibiting advanced photothermal properties and providing thermal regulation.

Each particle of the polymeric hybrid material presented within the scope of the invention generally has a core-shell structure. Here, the core of each particle is formed by a particle of the polymer that can be homogeneously dispersed and stable in a basic aqueous medium, and the shell is formed by polydopamine, which is coated on said each polymer particle. Since each of the polymer particles is coated with polydopamine, the hybrid material itself exhibits a photothermal effect. The polymeric hybrid material with such a core-shell structure is preferably stored in an aqueous medium and only when it is to be applied, it is separated from said aqueous medium and subjected to the appropriate application/production process. The separation of said polymeric hybrid material from the aqueous medium and shaping it in accordance with the purpose or form of use and/or application is preferably accomplished by evaporation of water.

In another embodiment of the present invention, the hybrid material of the invention also comprises one or more types of phase change materials. Phase change materials, which have the ability to store energy when changing their physical state from solid to liquid and to release the stored latent heat when changing from liquid to solid, are the materials that have been used in the field of thermal energy storage in recent years and attract attention especially in energy-related applications. This composite hybrid material, which is obtained by adding one or more different phase change materials to the structure of the photothermal polymeric hybrid material of the present invention, provides an effective way of obtaining a composite design consisting of collection of light, efficient conversion to heat, and storage of the obtained heat.

According to an embodiment of the invention, the phase change material incorporated into the hybrid material is optionally water-soluble or homogeneously dispersible, and is further selected from the group consisting of fatty acid, oligomeric or polymeric material, paraffin-based material, or a combination thereof. Thanks to the fact that the phase change material is water-soluble or homogeneously dispersible, it is ensured that the hybrid material which is the subject of the invention, kept in an aqueous medium, is combined with said phase change material in order to obtain a homogeneous structure and to be preserved in this way. In a preferred embodiment of the invention, said phase change material is polyethylene glycol. It is advantageous for at least some of the embodiments of the invention that the polyethylene glycol is water soluble and available in different molecular weights. Since polyethylene glycol can be available in different molecular weights, it can show different phase change temperatures according to its molecular weight, and thus, materials that function at the desired phase change temperature can be developed with polyethylene glycol.

According to the invention, said hybrid material comprises particles of polyurethane or a polymer made up of monomers including polyurethane monomers, each individually coated with polydopamine, as well as at least one kind of phase change material. Since the polymer particles therein are coated with polydopamine and also contain at least one kind of phase change material, the hybrid material itself shows a photothermal effect with an increased efficiency. The efficiency of the photothermal effect provided by the hybrid material can be increased or decreased, taking into account the requirements of the application in which it will be used, according to a change to be made in the amount or type, i.e., kind of the phase change material in the hybrid material.

In a preferred embodiment of the embodiment described above, in said hybrid material containing phase change material, the ratio of the weight of said polymer particles coated with polydopamine to the weight of the phase change material is in the range of 1:2 to 1:0.2. In another preferred embodiment in which the photothermal effect is increased, the ratio of the weight of said polymer particles coated with polydopamine to the weight of the phase change material is preferably in the range of 1:2 to 1:0.5, and more preferably of 1:1.2 to 1:0.5.

According to the invention, the method of production for a polymeric hybrid material with photothermal properties comprises the following steps:
a) preparing or providing an aqueous mixture of particles of polyurethane or a polymer made up of monomers including polyurethane monomers where said particles are in sub-micron scale;
b) adding dopamine monomer to said aqueous mixture;
c) bringing the pH of the mixture obtained in step (b) to a basic value;
d) subjecting the basic mixture obtained in step (c) to oxidative polymerization; and
e) obtaining a polymeric hybrid material in aqueous medium containing polydopamine coated polymer particles in sub-micron scale.

Said hybrid material obtained by the production method described in the invention is a polymeric hybrid material containing particles of polymers, each being individually coated with polydopamine. Thanks to the coating of the polymer particles with polydopamine, the hybrid material itself exhibits a photothermal effect and is advantageous in terms of imparting photothermal properties to the material to which it is applied or manufactured.

On the other hand, with the method described herein, it is ensured that polymer particles that can be homogeneously dispersed and stable in a basic aqueous medium are coated with polydopamine in a core-shell form. Thus, an advantageous and unique combination of suitable polymer particles and polydopamine is achieved. Besides, the thickness of the polydopamine coated on each polymer particle in the polymeric hybrid material obtained by following said method steps is homogeneous; i.e., the thickness of polydopamine is extremely even for each particle, and uniform when compared to other particles in the hybrid material. The formation of said hybrid material in the core-shell structure can be detected by the dynamic light scattering (DLS) method, with a slight increase in the size of the spherical polymer particles dispersed in water. The data of the experiment carried out by the inventors to observe this are presented below, without limiting the scope of the present invention:

### Example 1:

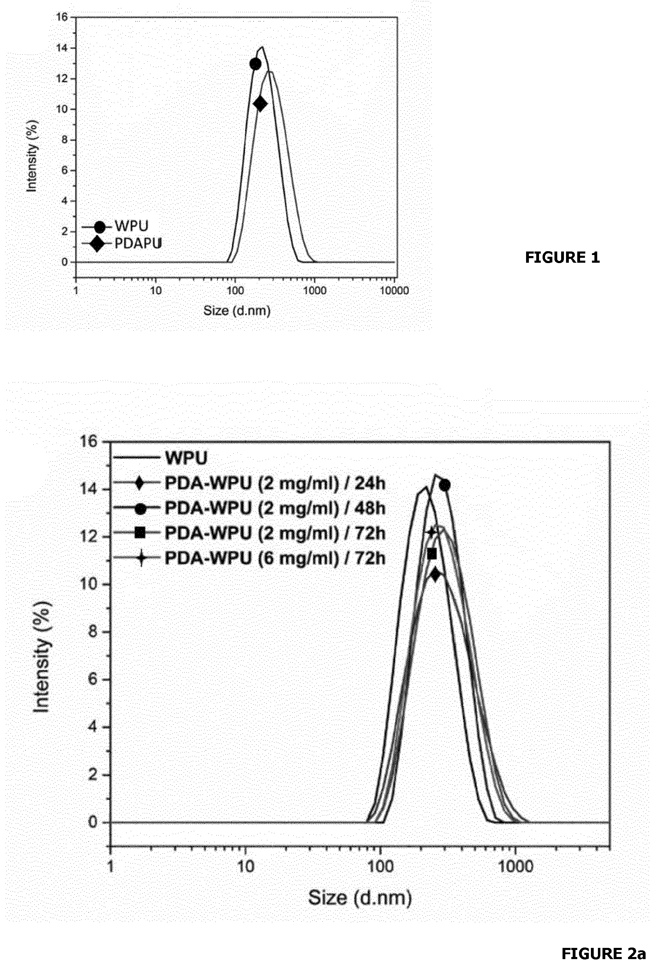

In order to carry out the experiment, polyurethane (WPU) was selected as the polymer that can be homogeneously dispersed and stable in a basic aqueous medium. In accordance with the method of the invention, a polyurethane dispersion (aqueous medium) was prepared which is homogeneously dispersed in water. In another vessel, dopamine dissolved in water was added to the aqueous medium containing the polyurethane particles, with a concentration of dopamine of 6 mg/ml by volume of water in the final aqueous medium (then, examples with 2 mg/ml were also prepared for comparison). After the pH of the mixture was adjusted to 8.5 using a suitable pH adjuster, the mixture was subjected to oxidative polymerization for 96 hours at 40 °C (then, samples that were kept for 24 h, 48 h and 72 h were also prepared for comparison purposes.). After the polymerization, it was observed that the aqueous medium containing only polyurethane particles was milky white in color, while the aqueous medium containing the polymeric hybrid material containing the polydopamine coated polyurethane particles (PDAPU) obtained at the end of the polymerization was grayish. The particle size distribution of polyurethane (WPU) and the obtained polymeric hybrid material containing polydopamine coated polyurethane particles (PDAPU) are shown in Figure 1, according to a measurement performed with a dynamic light scattering (DLS) device (Zetasizer Nano-ZS, Malvern Instruments Ltd., UK).

The method of production for the polymeric hybrid material with photothermal properties of the present invention optionally also includes the following step:
f) adding at least one phase change material to the resulting polymeric hybrid material in aqueous medium.

Said hybrid material, which is a preferred embodiment of the invention and obtained in accordance with the method applied including step (f), is a polymeric hybrid material containing particles of polymers, each being individually coated with polydopamine, and additionally at least one kind of phase change material. Because the polymer particles are coated with polydopamine and the hybrid material also contains phase change material, the hybrid material itself exhibits a photothermal effect with an increased efficiency. The data of the experiment carried out by the inventors to observe this are presented below, without limiting the scope of the present invention.

It has been observed that it is advantageous that said polymeric hybrid material can exhibit superior thermal properties if the phase change material added to the polymeric hybrid material in step (f) explained above is a phase change material that is water-soluble or homogeneously dispersible, and additionally selected from the group consisting of fatty acid, oligomer or polymeric material, paraffin-based material, or a combination thereof. The thermal property of a phase change material is important in terms of its contribution to the photothermal property of the polymeric hybrid material to which it is added. In another preferred embodiment, said phase change material is polyethylene glycol.

According to a preferred embodiment of the invention, the amount of dopamine monomer added in step (b) to said aqueous medium obtained in step (a) of the above-described production method is in the range of 2 to 8 mg/ml with respect to the volume of water in said aqueous medium. The amount of dopamine monomer added is effective in adjusting the thickness of the polydopamine coated on the hybrid material obtained by the method described. In another preferred embodiment of the invention, the amount of said dopamine monomer is in the range of 4 to 6 mg/ml with respect to the volume of water in the aqueous medium.

According to another embodiment of the invention, the proportion of polymer particles in said aqueous medium obtained from step (a) of the production method described above is in the range of 5 to 60% by weight. However, in another embodiment of the invention, the proportion of said polymer particles in the aqueous medium is in the range of 20 to 40% by weight.

The polymer that can be homogeneously dispersed and stable in a basic aqueous medium mentioned in step (a) of the production method of a polymeric hybrid material with photothermal properties, as explained above, is optionally selected from the group consisting of polyurethane, polyacrylate, polyester, epoxy, polyvinyl acetate, vinyl polymers, phenolic resin, and copolymers containing at least one of the monomers thereof. While it is clear that said polymer can be selected considering the field of application and/or the intended use, it is preferably selected from the group consisting of polyurethane, polyacrylate, and copolymers containing at least one of the monomers thereof.

The present invention also relates to the use of the polymeric hybrid material with photothermal properties. Said hybrid material is preferably used as a functional coating material. Besides, said hybrid material can also be used in the production of films, foams, membranes, adhesives, sponges and/or fibers. The invention also includes products containing polymeric hybrid material with photothermal properties. It should be noted that the hybrid material which is produced by the method according to the invention and/or having the properties described within the scope of the invention, can be used as a coating material, and it is also suitable for use as raw material in the production of different materials. Accordingly, the surface on which said hybrid material is applied or the product produced from said hybrid material is advantageous in terms of showing a photothermal effect.

Since the films obtained using the hybrid material of the present invention are extremely photothermally active, they are excellent materials used for converting light energy to thermal energy in many different applications from solar-powered distillation membranes used for water purification to light-sterilized surfaces.

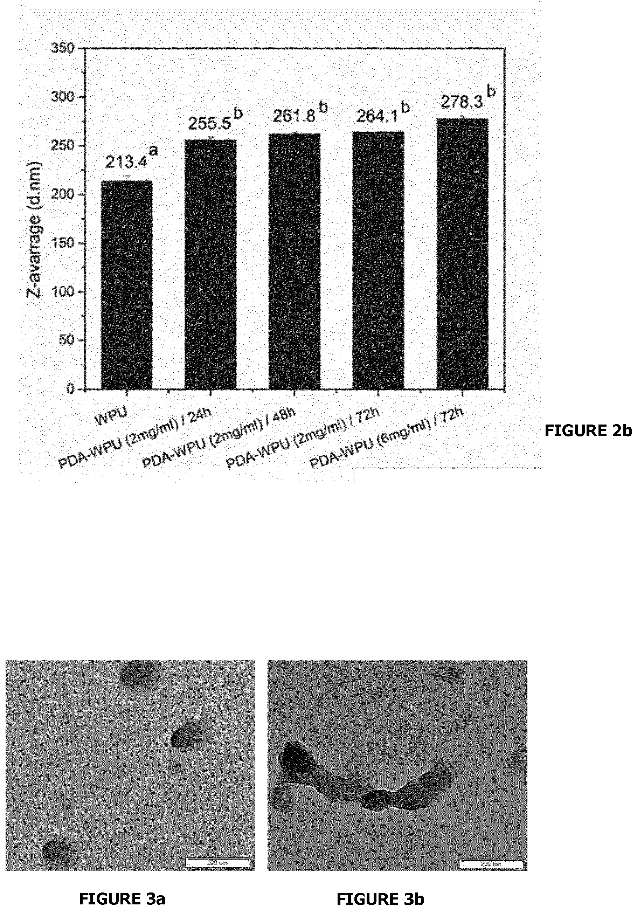

During the experimental studies, the inventors have identified that the dimensions of the polymer particles in the structure of the hybrid materials of the present invention has a significant impact on the final morphology and quality and therefore the technical properties of the films and coatings prepared using said hybrid material. On the other hand, as for the amount of dopamine monomer added in step (b) of the method to said aqueous mixture obtained in step (a) of the method described within the scope of the invention, with respect to the volume of water in said aqueous mixture, and also as a consequence of experimental studies performed on the polymerization time, it was observed that despite the varying amount of dopamine monomer and varying polymerization time, all of the hybrid materials obtained exhibit a unimodal size distribution. Graphics showing the particle size distribution of the materials obtained from said study performed with a dynamic light scattering (DLS) device (Zetasizer Nano-ZS, Malvern Instruments Ltd., UK) are presented in Figures 2a and b. Here, WPU: represents the polyurethane that is not coated with polydopamine, PDA-WPU (mg/ml)/(h): represents polymeric hybrid materials containing polydopamine coated polyurethane particles obtained by following the steps of the present invention - by subjecting the samples to which the dopamine monomer was applied in different amounts (2 mg/ml and 6mg/ml) in step (b) of the method, with respect to the volume of water in said aqueous mixture, to the polymerization process for different durations (24 h, 48 h, 72 h). The fact that no additional peak is present in the particle size distribution graph illustrated in Figure 2a, means that dopamine polymerization takes place on the surfaces of the polyurethane particles acting as a substrate, and as a result, hybrid materials of the invention (in this example, polydopamine coated polyurethane particles) are formed. Additionally, said graphic also shows that pure polydopamine particles are not formed, i.e., self-polymerization of polydopamine does not take place. The graphic in Figure 2b shows that the z-mean diameter values of PDA-WPU particles are significantly larger than WPU particle. In addition, it was identified that the diameter of the PDA-WPU particles increased in direct proportion to the increase in the initial amount of dopamine monomer and polymerization time. With this graphic, it is also confirmed that as a result of the method of the invention, polydopamine forms a coating layer on the polyurethane particles and that the thickness of the polyurethane coating can be controlled with the polymerization reaction conditions.

Figure 3a shows polyurethane particles dispersed in aqueous medium, while Figure 3b shows polyurethane particles coated with polydopamine dispersed in aqueous medium. The images in Figure 3a and 3b are obtained using the transmission electron microscope (Hitachi HT7800 cryo-TEM). As can be seen from said figures, polyurethane particles that are not coated provide an extremely smooth appearance, while polyurethane particles coated with polydopamine lead to a darker color due to the high electron density, resulting in formation of a rough and irregular image, which confirms the formation of the polymeric hybrid material of the invention.

During the studies on the hybrid material provided within the scope of the present invention and its production method and also on the usage area and performance of said material, the inventors have prepared films manufactured from said hybrid material. Without limiting the scope of the present invention, said films were prepared as described below: the polymeric hybrid material of the invention was poured on polytetrafluoroethylene (PTFE) molds (15x5 cm²) at room temperature and after drying under ambient conditions for three days, they were further dried for 1 hour in an oven at 100°C. After removing the bubble-free and homogeneous films from the mold, they were washed with plenty of distilled water in order to avoid any chemical residue from remaining on them. Subsequently, the films were kept in the dark in a desiccator after being dried in an oven at 80 °C for 2 hours. The resulting films were measured to have a thickness of 0.5 ± 0.08 mm. The thermal properties of said films are presented in Table 1. Here, WPU: represents the film obtained from the dispersion of polyurethane particles not coated with polydopamine, PDA-WPU (mg/ml)/(h): represents the films of the polymeric hybrid materials (samples in which different amounts (2 mg/ml and 6mg/ml) of dopamine monomer were applied with respect to volume of water in the aqueous mixture to which it will be added in step (b) of the method and which are subjected to the polymerization process for varying times (24 h, 48 h, 72 h)) containing polydopamine coated polyurethane particles obtained by following the steps of the invention.

**Table 1**

| | *T*_{PDA-WPU} (°C) | *T*_{PDA-WPU} (°C) | *T*_{PDA-WPU} (°C) | *Tₐ* DSC(°C) | Thermal conductivity *(W*/*m*K)* |
|---|---|---|---|---|---|
| WPU | 314.1 | 379.8 | 402.6 | -42.9 | 0.1462 **a** |
| PDA-WPU(2mg/ml)/24h | 320.1 | 199.1 | 414.3 | -42.8 | 0.2078 **b** |
| PDA-WPU(2mg/ml)/48h | 324.8 | 403.8 | 419.3 | -43.1 | 0.2088 **b** |
| PDA-WPU(2mg/ml)/72h | 330.3 | 407.1 | 423.3 | -43.3 | 0.2249 **c** |
| PDA-WPU(6mg/ml)/72h | 323.3 | 398.6 | 412.4 | -43.8 | 0.2336 **d** |

The table above provides decomposition temperatures by weight % of the film (WPU) produced from dispersion of polyurethane particles not coated with polydopamine and decomposition temperatures (T_{D}) of the films (PDA-WPU (mg/ml)/h) produced from dispersion of polyurethane particles coated with polydopamine which are prepared so as to have increased polydopamine content/polymerization time. Accordingly, it is clearly seen that decomposition temperatures (T_{D}) by weight % of each of the films (PDA-WPU (mg/ml)/h) produced from the dispersion of polyurethane particles coated with polydopamine is higher than that of the film (WPU) produced from the dispersion of polyurethane particles not coated with polydopamine. From this, it is concluded that the increased thermal stability of the films (PDA-WPU (mg/ml)/h) produced from the dispersion of polyurethane particles coated with polydopamine depends on the presence of polydopamine in the polymer matrix. Since the glass transition temperature (T_{g}) of the polymer matrices is one of the most important factors reflecting their morphology and determining their mechanical properties, the effects of polydopamine content on the glass transition temperature values of the film samples were analyzed with DSC analysis. As can be seen from the above table, there is a significant difference between T_{g} values of the films (PDA-WPU (mg/ml)/h) produced from the dispersion of polyurethane particles coated with polydopamine and T_{g} value of the film (WPU) produced from the dispersion of polyurethane particles not coated with polydopamine. It is concluded that polyurethane matrices which contain polydopamine have maintained the T_{g} value.

In systems designed within the framework of the photothermal effect concept, the thermal conductivity of the used material is an extremely significant phenomenon. As can be seen from the above table, the thermal conductivity of the film produced from the dispersion of polyurethane (WPU) particles not coated with polydopamine was measured as 0.1462 W/m°K, while the thermal conductivity of the film (PDA-WPU (6 mg/ml)/72h) produced from the dispersion of polyurethane particles coated with polydopamine was measured as 0.2316 W/m°K. As a result, because the thermal conductivity of the chains with aromatic backbone networks is higher than that of aliphatic backbone structures, it was identified that the thermal conductivity of the prepared polydopamine containing polyurethane (PDA-WPU) films was higher than the thermal conductivity of the polyurethane (WPU) film.

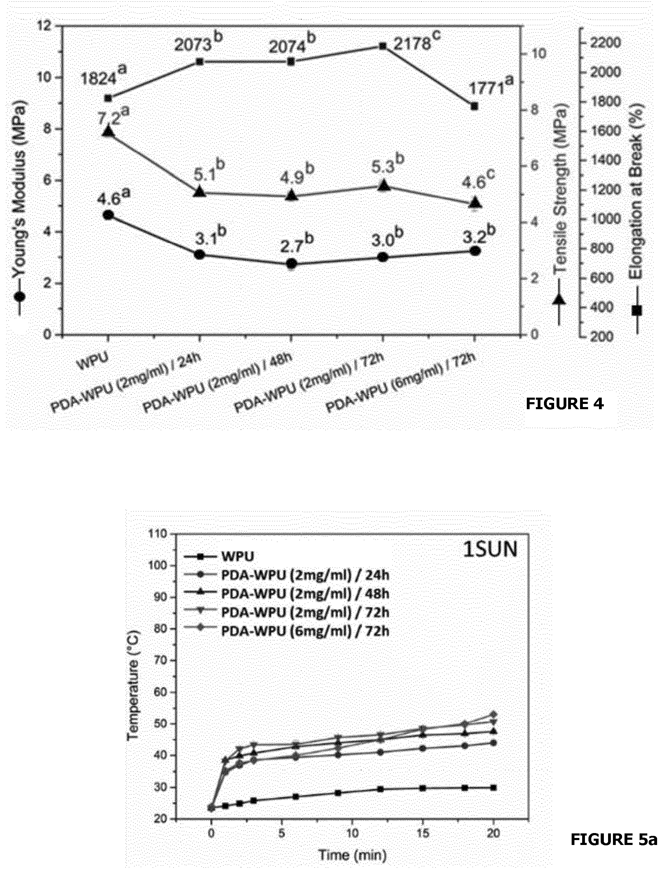

The intermolecular forces of the elastomeric materials are known to be relatively weak. Therefore, they generally have low elasticity (Young's modulus) and high breaking stress, when compared to other materials. In Figure 4, the mechanical properties of the films of the polymeric hybrid material samples in which different amounts (2 mg/ml and 6mg/ml) of dopamine monomer were applied in step (b) of the method of the present invention and subjected to polymerization for varying times (24 h, 48 h, 72 h) in step (d), containing polydopamine coated polyurethane particles are presented in terms of Young's modulus (YM), tensile strength (TS) and elongation at break (EB) values. Although it was determined that the films produced from the dispersion of polydopamine coated polyurethane (PDA-WPU) particles have a lower Young's modulus value than the film produced from the dispersion of polyurethane not coated with polydopamine (WPU), it was observed that there was no correlation between the polydopamine value and the Young's modulus value in the films prepared. However, it was seen that the elongation at break (EB) values of the polydopamine containing polyurethane (PDA-WPU) films increased in proportion to the polymerization times. On the other hand, it was observed that the films produced from the dispersion of polyurethane (PDA-WPU (2 mg/ml)) particles coated with polydopamine prepared using 2 mg/ml dopamine monomer have lower tensile strength values than polyurethane WPU films that are not coated with polydopamine.

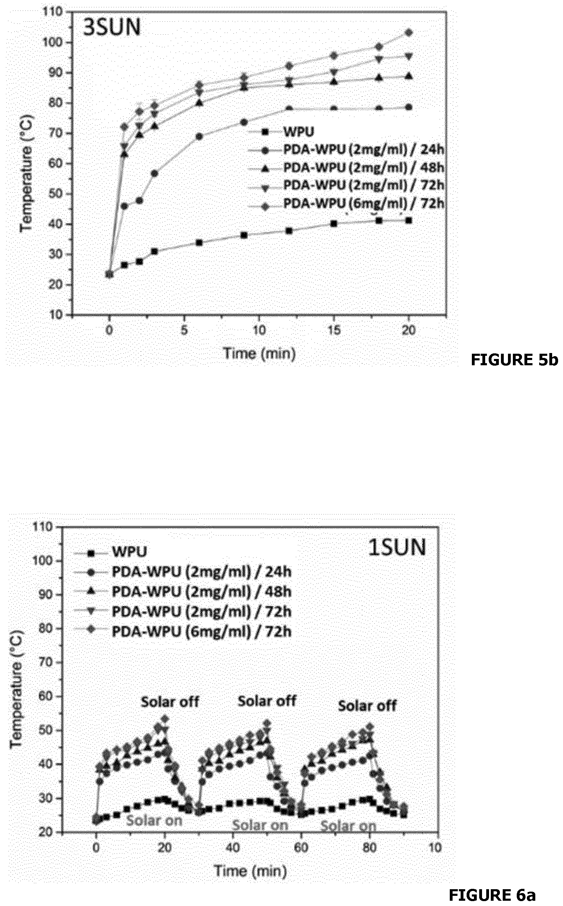

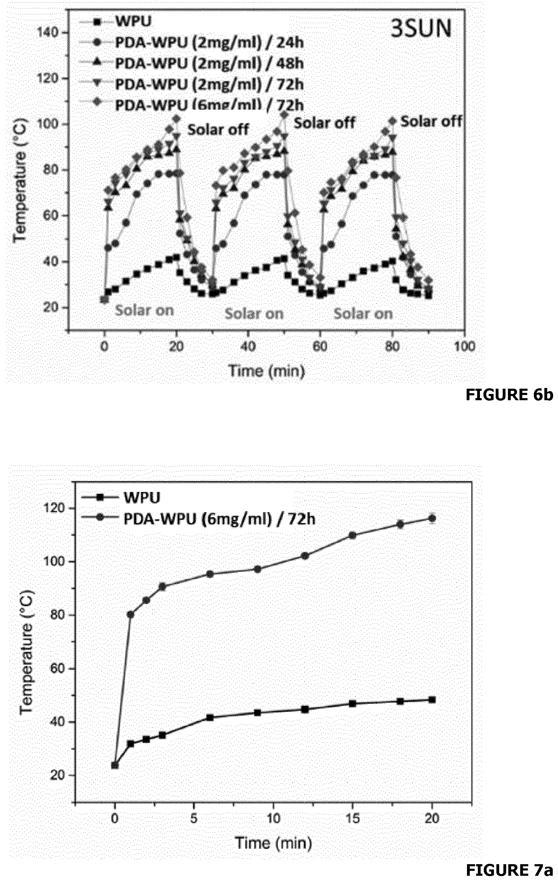

The inventors also comparatively examined the heat to light conversion abilities of the films produced from the dispersion of polyurethane (PDA-WPU) particles coated with polydopamine and the film produced from the dispersion of polyurethane (WPU) not coated with polydopamine. The time-temperature profiles of the films obtained from dispersions of polyurethane coated with various amounts of polydopamine (PDA-WPU) - with respect the volume of water in the mixture to which the dopamine monomer will be added - and polyurethane not coated with polydopamine (WPU), are shown exposed to sunlight of 1 SUN (100 mW/cm²) in Figure 5a and 3 SUN (300 mW/cm²) in Figure 5b. It is seen from said figures that under sunlight, films produced from the dispersion of polydopamine coated polyurethane (PDA-WPU) particles exhibit a significant temperature increase compared to the film produced from the dispersion of polyurethane not coated with polydopamine (WPU). If we look closely, it is also seen that the temperature increase in the films produced from the dispersion of the polydopamine coated polyurethane (PDA-WPU) particles is proportional to the polydopamine content in said films. The film sample of polydopamine containing polyurethane (6mg/ml)/72h prepared with the highest initial dopamine content showed the highest temperature increase and its temperature reached to 115.4°C in 20 minutes under 3 SUN. Under the same conditions, the temperature of the polyurethane (WPU) film without polydopamine content reached almost 39.4°C, which highlights the effect of the amount of polydopamine in polydopamine containing polyurethane (PDA-WPU) films on the capacity of conversion of solar energy to thermal energy. On the other hand, the reusability of polydopamine containing polyurethane (PDA-WPU) films was tested and the results are presented in Figures 6a and 6b. The photothermal heating capabilities of all polydopamine containing polyurethane (PDA-WPU) films remained unchanged after exposing to sunlight of three cycles, which means that such materials have sufficient stability under photothermal heating conditions which is a critical requirement in many different applications.

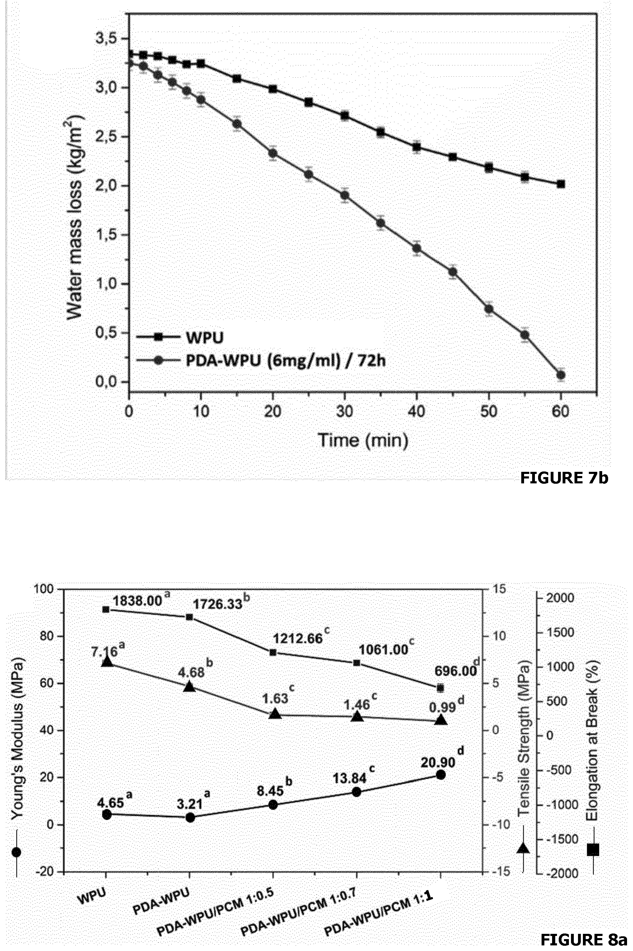

One of the most popular application areas of the photothermal conversion phenomenon is water evaporation systems based on solar energy. Therefore, the inventors, comparing polydopamine coated polyurethane (PDA-WPU), as an example of the hybrid materials of the present invention, with polyurethane not coated with polydopamine (WPU), have evaluated the present invention in terms of use for water evaporation systems based on solar energy. To this end, polydopamine coated polyurethane (PDA-WPU (6mg/ml)/72h) prepared with an initial dopamine content of 6mg/ml, which is the photothermal polymer that reaches the highest temperature under sunlight, and also the uncoated polyurethane (WPU) were poured into suitable molds to have a small container structure as the final product. The prepared containers were exposed to sunlight with an intensity of 3 SUN (300 mW/cm²) and by measuring the temperatures of the inner surfaces of the empty containers, the time-temperature profiles in Figure 7a were created. The inner surface temperature of the PDA-WPU (6mg/ml)/72h container reached 118.7 °C as a result of exposure to 3 SUN sunlight for 20 minutes, while the inner surface temperature of the WPU container was measured to be at only 43.6 C under the same conditions. After these measurements, said WPU and PDA-WPU (6mg/ml)/72h containers were filled with water corresponding to approximately 3.2 kg/m² and then exposed to 3 SUN sunlight. 30 minutes after, the temperature of the water in the containers exposed to sunlight was read as 49.6°C and 78.2°C, respectively. As another study, the mass loss and evaporation rates of water in WPU and PDA-WPU (6mg/ml)/72h containers were recorded by measuring time-based mass loss data for one hour under 3 SUN sunlight. As seen in Figure 7b, while an average of 1.29 kg/m² of water evaporates from the WPU container in 60 minutes, it was observed that in the same time, an average of 3.17 kg/m² water - almost all water - evaporated from the PDA-WPU (6mg/ml)/72h container. While the average evaporation rate of the water in the WPU container is calculated as 1.18 kg/m².h, the average evaporation rate of the water in the PDA-WPU container was calculated as 2.81 kg/m².h. This shows that the average evaporation rate of water in the WPU container is more than twice the average evaporation rate of the water in the PDA-WPU container.

Without limiting the scope of the present invention, the inventors also prepared samples containing phase change material, in addition to the sample of polydopamine (6 mg/ml) coated polyurethane (PDA-WPU), which was prepared as described under Example 1 above. For this purpose, various amounts of polyethylene glycol were added to said PDA-WPU and the added polyethylene glycol was dissolved with mixing. The ratio of solid weight (weight of PDA-WPU particles: weight of PCM) in the obtained samples of polyurethane coated with polydopamine (6 mg/ml) (PDA-WPU/PCM) and containing phase change material is 1:1, 1:0.7 and 1:0.5. The obtained samples in the aqueous medium were poured on polytetrafluoroethylene (PTFE) molds (15x5 cm²) at room temperature and dried under ambient conditions (with slow water evaporation) for three days. After the prepared films were removed from the mold, they were kept in a 30 °C oven overnight and then kept in the dark in a desiccator. The thickness of the films obtained was measured as 0.7 ± 0.12 mm. Here, WPU: represents the polyurethane not coated with polydopamine, PDA-WPU: represents the polymeric hybrid material containing polydopamine (6mg/ml) coated polyurethane particles and PDA-WPU/PCM 1:1, PDA-WPU/PCM 1:0.7 and PDA-WPU/PCM 1:0.5 respectively represent polydopamine (6mg/ml) coated polyurethane particles containing polyethylene glycol such that the ratio of the weight of the PDA-WPU particles to the weight of the phase change material (PCM) is 1:1, 1:0.7, and 1:0.5. As shown in Figure 8a, significant differences were observed between PDA-WPU/PCM films and WPU and PDA-WPU films in terms of their general mechanical behavior. While The Young's modulus of the PDA-WPU film was measured as 3.21 MPa, the Young's modulus of the PDA-WPU/PCM 1:1 film was measured as 20.9 MPa, which was increased -7 times. On the other hand, due to the increase in the amount of polyethylene glycol in the PDA-WPU/PCM films, it is observed that the values of the tensile strength (TS) and elongation at break (EB) of said hybrid films have significantly decreased. These findings show that increasing the amount of polyethylene glycol in PDA-WPU/PCM films causes a gradual increase in the fragile characteristics of these films and a decrease int their elasticity.

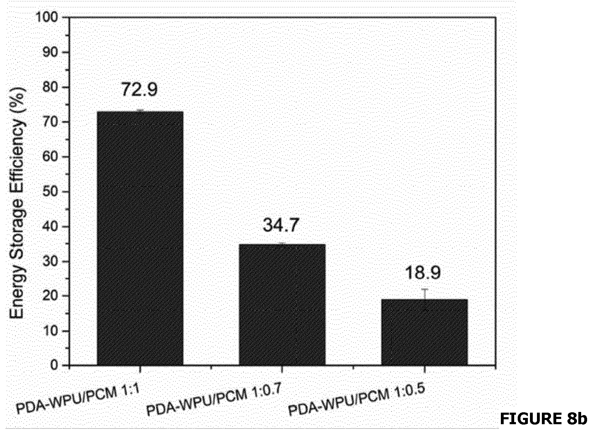

On the other hand, during the studies, the time-temperature profiles for WPU, PDA-WPU and PDA-WPU/PCM film samples were measured and compared by exposing said samples to sunlight of the same intensity (150 mW/cm²) for 20 minutes (not shown in the figures). As a result of the measurements carried out at room temperature, it was observed that the temperature of the WPU film only reached 30.4 °C, while the temperature of the PDA-WPU film increased to 61.3 °C and the temperature of the PDA-WPU/PCM 1:1 film decreased to 74.8 °C. Accordingly, it has been proven that films made of hybrid material coated with polydopamine have been synergistically imparted an effective photothermal property, and the addition of phase change material to the hybrid material has increased the photothermal property imparted to the hybrid material coated with polydopamine. In order to observe the effects of the amount of phase change material added to the hybrid material of the invention, the energy storage efficiencies of PDA-WPU/PCM film samples (PDA-WPU/PCM 1:1, PDA-WPU/PCM 1:0.7 and PDA-WPU/PCM 1:0.5) were measured and presented in Figure 8b. Accordingly, composite PDA-WPU/PCM films were exposed to direct sunlight under ambient conditions. As can be seen from Figure 8b, PDA-WPU/PCM 1:0.7 and PDA-WPU/PCM 1:0.5 films, which have relatively lower polyethylene glycol content, have a lower energy storage performance than PDA-WPU/PCM 1:1 film. In addition, it has been determined that the PDA-WPU/PCM 1:1 film has an advantageous energy storage efficiency compared to the systems with different thermal properties available in the literature. Here, it is also advantageous that the hybrid material subject to the present invention is not a semi-finished material, but a final product that can be used directly within the framework of different applications as needed.

The photothermal polymeric hybrid materials presented within the scope of the present invention can be used as a raw material in the production of a container that can contain water, or a foam that can float on or in water. In this context, the object in the form of a container or foam can be used in water evaporation systems in order to purify the water through evaporation by way of sunlight. On the other hand, the products obtained from coating said polymeric hybrid materials on suitable surfaces can also be used as a light-activated antimicrobial surface coating in antimicrobial systems. When an antimicrobial surface coated with the hybrid material of the invention is exposed to sunlight or a light source of near infrared wavelength, micro-organisms are physically deactivated due to the temperature increase on said surface. As another example, the hybrid material of the present invention may, for example, also be used as a self-healing coating, adhesive or binder. To explain, surface coatings or adhesives containing the hybrid material of the present invention will cause an increase in temperature as a result of exposure to sunlight or a light source of near infrared wavelength, due to their photothermal properties. Due to the heat emerging from the temperature increase, the mobility of polymer chains will come to the fore. In this way, if there are scratches, cracks, slots and similar damages in the structure of the product they are applied to/ incorporated into, these will be able to heal up by themselves.

When the photothermal polymeric hybrid materials presented within the scope of the present invention are compared with the materials described in the literature for applications such as energy storage, water evaporation or use in antimicrobial systems, the hybrid materials of the present invention appear to be seriously advantageous. In addition, the hybrid material described within the scope of the present invention does not contain any toxic components, and it is a cost-effective, environmentally and user-friendly product to be used in terms of the photothermal property resulting from its water-based nature without nanoparticles and catalysts. On the other hand, said polymeric hybrid material is also advantageous in terms of being particulate and being easily applied/coated. Unlike other photothermal materials reported in the literature, the hybrid materials of the present invention can be easily applied as single component systems to obtain coatings or independent films. In addition to these advantages, it is superior to many different photothermal systems/materials in terms of ease of production and applicability. With the advantages above, it is clear that the hybrid material of the present invention finds use in different applications in the field of photothermal conversion, either as a monolithic photothermal polymer matrix, alone or as an effective component of a composite system.

## Claims

1. A polymeric hybrid material with photothermal properties containing polydopamine and particles of polyurethane or a copolymer made up of monomers including polyurethane monomers, wherein the surfaces of said particles are coated with polydopamine and wherein the particles are in sub-micron scale.

2. The hybrid material according to claim 1, wherein it contains at least one phase change material.

3. The hybrid material according to claim 2, wherein said phase change material is water-soluble or homogeneously dispersible, and selected from the group consisting of a fatty acid, oligomer or polymeric material, paraffin-based material, or a combination thereof.

4. The hybrid material according to claim 3, wherein said phase change material is polyethylene glycol.

5. The hybrid material according to any one of the claims 2 to 4, wherein the ratio of the weight of said particles coated with polydopamine to the weight of the phase change material is in the range of 1:2 to 1:0.2.

6. The hybrid material according to claim 5, wherein the ratio of the weight of said particles coated with polydopamine to the weight of the phase change material is in the range of 1:2 to 1:0.5.

7. The hybrid material according to claim 6, wherein the ratio of the weight of said particles coated with polydopamine to the weight of the phase change material is in the range of 1:1.2 to 1:0.5.

8. A method of production for a polymeric hybrid material with photothermal properties, comprising the following steps:
a) preparing or providing an aqueous mixture of particles of polyurethane or a copolymer comprising polyurethane monomers where said particles are in sub-micron scale;
b) adding dopamine monomer to said mixture;
c) bringing the pH of the mixture obtained in step (b) to a basic value;
d) subjecting the basic mixture obtained in step (c) to oxidative polymerization; and
e) obtaining a polymeric hybrid material in aqueous medium containing polydopamine coated polymer particles in sub-micron scale.

9. The method of production for the hybrid material according to claim 8, also comprising the following step:
f) adding at least one phase change material to the resulting polymeric hybrid material in aqueous medium.

10. The method of production for the hybrid material according to claims 8 to 9, wherein the amount of dopamine monomer added in step (b) to the aqueous medium obtained in step (a) is in the range of 2 to 8 mg/ml with respect to the volume of water in said aqueous medium.

11. The method of production for the hybrid material according to claims 9 to 11, wherein said phase change material is water-soluble or homogeneously dispersible, and selected from the group consisting of a fatty acid, oligomer or polymeric material, paraffin-based material, or a combination thereof.

12. The method of production for the hybrid material according to claim 12, wherein said phase change material is polyethylene glycol.

13. Use of the polymeric hybrid material with photothermal properties according to any one of claims 1 to 7 as a functional coating material.

14. Use of the polymeric hybrid material with photothermal properties according to any one of claims 1 to 7 in the production of films, foams, membranes, adhesives, sponges, fibers.

15. Product containing the polymeric hybrid material with photothermal properties according to any one of claims 1 to 7.

## Patentansprüche

1. Polymeres Hybridmaterial mit photothermischen Eigenschaften, das Polydopamin und Teilchen aus Polyurethan oder einem Copolymer, das aus Monomeren einschließlich Polyurethanmonomeren besteht, enthält, wobei die Oberflächen der Teilchen mit Polydopamin beschichtet sind und wobei die Teilchen im Submikrometerbereich sind.

2. Hybridmaterial nach Anspruch 1, wobei es mindestens ein Phasenwechselmaterial enthält.

3. Hybridmaterial nach Anspruch 2, wobei das Phasenwechselmaterial wasserlöslich oder homogen dispergierbar ist und aus der Gruppe ausgewählt ist, die aus einem Fettsäure-, Oligomer- oder Polymermaterial, Material auf Paraffinbasis oder einer Kombination davon besteht.

4. Hybridmaterial nach Anspruch 3, wobei das Phasenwechselmaterial Polyethylenglykol ist.

5. Hybridmaterial nach einem der Ansprüche 2 bis 4, wobei das Verhältnis des Gewichts der mit Polydopamin beschichteten Teilchen zum Gewicht des Phasenwechselmaterials im Bereich von 1:2 bis 1:0,2 liegt.

6. Hybridmaterial nach Anspruch 5, wobei das Verhältnis des Gewichts der mit Polydopamin beschichteten Teilchen zum Gewicht des Phasenwechselmaterials im Bereich von 1:2 bis 1:0,5 liegt.

7. Hybridmaterial nach Anspruch 6, wobei das Verhältnis des Gewichts der mit Polydopamin beschichteten Teilchen zum Gewicht des Phasenwechselmaterials im Bereich von 1:1,2 bis 1:0,5 liegt.

8. Herstellungsverfahren für ein polymeres Hybridmaterial mit photothermischen Eigenschaften, das die folgenden Schritte umfasst:
a) Herstellen oder Bereitstellen einer wässrigen Mischung von Teilchen aus Polyurethan oder einem Copolymer, das Polyurethanmonomere umfasst, wobei die Teilchen im Submikrometerbereich sind;
b) Zugeben von Dopaminmonomer zu der Mischung;
c) Bringen des pH-Werts der in Schritt (b) erhaltenen Mischung auf einen Basiswert;
d) Unterziehen der in Schritt (c) erhaltenen Basismischung einer oxidativen Polymerisation; und
e) Erhalten eines polymeren Hybridmaterials in wässrigem Medium, das Polydopamin-beschichtete Polymerteilchen im Submikrometerbereich enthält.

9. Herstellungsverfahren für das Hybridmaterial nach Anspruch 8, das auch den folgenden Schritt umfasst:
f) Zugeben mindestens eines Phasenwechselmaterials zu dem resultierenden polymeren Hybridmaterial in wässrigem Medium.

10. Herstellungsverfahren für das Hybridmaterial nach den Ansprüchen 8 bis 9, wobei die Menge an Dopaminmonomer, die in Schritt (b) zu dem in Schritt (a) erhaltenen wässrigen Medium zugegeben wird, im Bereich von 2 bis 8 mg/ml in Bezug auf das Volumen von Wasser in dem wässrigen Medium liegt.

11. Herstellungsverfahren für das Hybridmaterial nach den Ansprüchen 9 bis 11, wobei das Phasenwechselmaterial wasserlöslich oder homogen dispergierbar ist und aus der Gruppe ausgewählt ist, die aus einem Fettsäure-, Oligomer- oder Polymermaterial, Material auf Paraffinbasis oder einer Kombination davon besteht.

12. Herstellungsverfahren für das Hybridmaterial nach Anspruch 12, wobei das Phasenwechselmaterial Polyethylenglykol ist.

13. Verwendung des polymeren Hybridmaterials mit photothermischen Eigenschaften nach einem der Ansprüche 1 bis 7 als funktionelles Beschichtungsmaterial.

14. Verwendung des polymeren Hybridmaterials mit photothermischen Eigenschaften nach einem der Ansprüche 1 bis 7 bei der Herstellung von Filmen, Schäumen, Membranen, Klebstoffen, Schwämmen, Fasern.

15. Produkt, das das polymere Hybridmaterial mit photothermischen Eigenschaften nach einem der Ansprüche 1 bis 7 enthält.

## Revendications

1. Un matériau hybride polymère à propriétés photothermiques contenant de la polydopamine et des particules de polyuréthane ou un copolymère composé de monomères comprenant des monomères de polyuréthane, les surfaces desdites particules étant revêtues de polydopamine et les particules étant à une échelle submicronique.

2. Le matériau hybride selon la revendication 1, contenant au moins un matériau à changement de phase.

3. Le matériau hybride selon la revendication 2, dans lequel ledit matériau à changement de phase est soluble ou dispersable de manière homogène dans l'eau, et est choisi dans le groupe constitué d'un acide gras, d'un oligomère ou d'un matériau polymère, d'un matériau à base de paraffine, ou d'une combinaison de ceux-ci.

4. Le matériau hybride selon la revendication 3, dans lequel ledit matériau à changement de phase est du polyéthylène glycol.

5. Le matériau hybride selon l'une quelconque des revendications 2 à 4, dans lequel le rapport du poids desdites particules revêtues de polydopamine au poids du matériau à changement de phase est compris entre 1:2 et 1:0,2.

6. Le matériau hybride selon la revendication 5, dans lequel le rapport du poids desdites particules revêtues de polydopamine au poids du matériau à changement de phase est compris entre 1:2 et 1:0,5.

7. Le matériau hybride selon la revendication 6, dans lequel le rapport entre le poids desdites particules revêtues de polydopamine et le poids du matériau à changement de phase est compris entre 1:1,2 et 1:0,5.

8. Un procédé de production d'un matériau hybride polymère à propriétés photothermiques, comprenant les étapes suivantes :
a) préparer ou fournir un mélange aqueux de particules de polyuréthane ou d'un copolymère comprenant des monomères de polyuréthane, lesdites particules étant à une échelle submicronique ;
b) ajouter du monomère de dopamine audit mélange ;
c) amener le pH du mélange obtenu à l'étape (b) à une valeur basique ;
d) soumettre le mélange basique obtenu à l'étape (c) à une polymérisation oxydante ; et
e) obtenir un matériau hybride polymère dans un milieu aqueux contenant des particules polymères revêtues de polydopamine à l'échelle submicronique.

9. Le procédé de production du matériau hybride selon la revendication 8, comprenant également l'étape suivante :
f) ajouter au moins un matériau à changement de phase au matériau hybride polymère résultant dans un milieu aqueux.

10. Le procédé de production du matériau hybride selon les revendications 8 à 9, dans lequel la quantité de monomère de dopamine ajoutée à l'étape (b) au milieu aqueux obtenu à l'étape (a) est comprise entre 2 et 8 mg/ml par rapport au volume d'eau dans ledit milieu aqueux.

11. Le procédé de production du matériau hybride selon les revendications 9 à 11, dans lequel ledit matériau à changement de phase est hydrosoluble ou dispersable de manière homogène, et choisi dans le groupe constitué par un acide gras, un oligomère ou un matériau polymère, un matériau à base de paraffine, ou une combinaison de ceux-ci.

12. Le procédé de production du matériau hybride selon la revendication 12, dans lequel ledit matériau à changement de phase est le polyéthylène glycol.

13. Utilisation du matériau hybride polymère à propriétés photothermiques selon l'une quelconque des revendications 1 à 7 comme matériau de revêtement fonctionnel.

14. Utilisation du matériau hybride polymère à propriétés photothermiques selon l'une quelconque des revendications 1 à 7 dans la réalisation de films, mousses, membranes, adhésifs, éponges, fibres.

15. Produit contenant le matériau hybride polymère à propriétés photothermiques selon l'une quelconque des revendications 1 à 7.
